# EUROPEAN PATENT SPECIFICATION

(11) **EP 4 490 875 B1**
(45) Date of publication and mention of the grant of the patent: **29.04.2026**
(21) Application number: 22931186.5
(22) Date of filing: 09.03.2022
(51) Int. Cl.: H04L 9/32, H04L 67/1097, G06F 21/34, G06F 21/64

(54) **CRYPTOGRAPHIC KEY STORE ON CARD**
KRYPTOSCHLÜSSELSPEICHER AUF KARTE
MAGASIN DE CLÉS CRYPTOGRAPHIQUES SUR CARTE

(43) Date of publication of application: 15.01.2025
(73) Proprietor: Visa International Service Association, San Francisco, California 94128 (US)
(72) Inventor: ILGICIOGLU, Abdullah Burak, San Francisco, California 94128 (US)
(74) Representative: EIP
(86) International application number: PCT/US2022/019559
(87) International publication number: WO 2023/172261

(56) References cited:
- WO-A1-2019/020824
- WO-A1-2021/262089
- US-A1- 2017 236 121
- US-A1- 2019 052 461
- US-A1- 2020 302 432
- US-A1- 2021 049 591
- US-A1- 2021 328 786

## Description

### BACKGROUND

Blockchains are now used for many purposes (e.g., cryptocurrencies, secure sharing of data, art ownership tracking, etc.). For example, cryptocurrencies can be transferred on decentralized blockchain networks and can utilize private/public cryptographic key pairs.

In a typical use case, a user uses a user device to generate a cryptographic key pair for use with a blockchain network. The private key of the key pair is stored on the user device, while the public key may be used by other devices. The user device may be a general purpose mobile phone or laptop computer, and if the user device is lost, stolen or damaged, access to the blockchain network can be lost. If the blockchain network manages cryptocurrency, this can result in the user losing all of his or her funds. Also, because the user device that stores the keys is typically a general purpose device, it is online for a significant period of time and can be susceptible to hacking. If the keys are stolen by a hacker, then the hacker could perform fraudulent transactions.

Furthermore, since the user device that holds the private key of the public/private key pair is on a device such as a mobile phone or a laptop computer, the user device may be difficult to transport or use in certain circumstances. For example, some access devices may not have the hardware or software to interact with such user devices, so the ability to use a user device such as mobile phone or laptop computer with a blockchain may be limited in some circumstances.

Embodiments of the disclosure address these problem and other problems individually and collectively.

US 2021/0049591 discusses a digital wallet device for storing and securing cryptocurrency.

### SUMMARY

Aspects of the invention are set out in the accompanying claims. One embodiment is related to a method comprising: receiving, by a sender device operated by a sender, a receiver address associated with a receiver; prompting, by the sender device, the sender to interact a card comprising a processor and a memory storing a sender public key and a sender private key of a sender public-private key pair associated with a blockchain network, the card held by the sender; transmitting, by the sender device, interaction data including the receiver address, a sender address of the sender, and a value to the card, wherein the processor of the card retrieves the sender private key and signs the interaction data to produce signed interaction data; receiving, by the sender device from the card, the signed interaction data and the sender public key; and transmitting the interaction data and the signed interaction data to the blockchain network, wherein the blockchain network records the interaction data and the signed interaction data in a block of a blockchain, wherein the blockchain comprises a plurality of blocks, wherein each block of the plurality of blocks includes a block header, a timestamp, and a link to a previous block.

Another embodiment is related to a sender device comprising: a processor; a memory device; and a computer-readable medium coupled to the processor, the computer-readable medium comprising code executable by the processor for implementing a method comprising: receiving, by the sender device operated by a sender, a receiver address associated with a receiver; prompting the sender to interact a card comprising a card processor and a card memory storing a sender public key and a sender private key of a sender public-private key pair associated with a blockchain network, the card held by the sender; transmitting interaction data including the receiver address, a sender address of the sender, and a value, wherein the card processor retrieves the sender private key and signs the interaction data to produce signed interaction data; receiving, from the card, the signed interaction data and the sender public key; and transmitting the interaction data and the signed interaction data to the blockchain network, wherein the blockchain network records the interaction data and the signed interaction data in a block of a blockchain, wherein the blockchain comprises a plurality of blocks, wherein each block of the plurality of blocks includes a block header, a timestamp, and a link to a previous block.

Another embodiment is related to a method comprising: receiving, by a card comprising a processor and a memory storing a sender public key and a sender private key of a sender public-private key pair associated with a blockchain network, interaction data including a receiver address, a sender address of a sender, and a value from a sender device; retrieving, by the card, the sender private key and the sender public key; signing, by the card, the interaction data with the sender private key to produce signed interaction data; and sending, by the card, the signed interaction data and the sender public key to the sender device, wherein the sender device transmits the interaction data and the signed interaction data to the blockchain network, wherein the blockchain network records the interaction data and the signed interaction data in a block of a blockchain, wherein the blockchain comprises a plurality of blocks, wherein each block of the plurality of blocks includes a block header, a timestamp, and a link to a previous block.

Further details regarding embodiments of the disclosure can be found in the Detailed Description and the Figures.

### BRIEF DESCRIPTION OF THE DRAWINGS

FIG. 1 shows a block diagram of a system comprising a first cryptographic key store on a card according to embodiments.
FIG. 2 shows a block diagram of another system comprising a cryptographic key store on a card according to embodiments.
FIG. 3 shows a card according to embodiments.
FIG. 4 shows a block diagram of components of a user device according to embodiments.
FIG. 5 shows a flow diagram illustrating a first cryptographic key provisioning method according to embodiments.
FIG. 6 shows a flow diagram illustrating a second cryptographic key provisioning method according to embodiments.
FIG. 7 shows a flow diagram illustrating a digital wallet on card creation method according to embodiments.
FIG. 8 shows a flow diagram illustrating a receiving method according to embodiments.
FIG. 9 shows a flow diagram illustrating a sending method according to embodiments.
FIG. 10 shows a block diagram illustrating a card and a blockchain with inputs and outputs according to embodiments.

### DETAILED DESCRIPTION

Prior to discussing embodiments of the disclosure, some terms can be described in further detail.

A "user" may include an individual. In some embodiments, a user may be associated with one or more personal accounts and/or mobile devices. The user may also be referred to as a cardholder, account holder, or consumer in some embodiments. A user can be a sender or a receiver.

A "user device" can be a computing device operated by a user. A user device can be a sender device or a receiver device. Examples of user devices may include a mobile phone, a smart phone, a personal digital assistant (PDA), a laptop computer, a desktop computer, a server computer, a vehicle such as an automobile, a light client device, a tablet PC, etc. Additionally, user devices may be any type of wearable technology device, such as a watch, earpiece, glasses, etc. The user device may include one or more processors capable of processing user input. The user device may also include one or more input sensors for receiving user input. The user device may comprise any electronic device that may be operated by a user, which may also provide remote communication capabilities to a network. Examples of remote communication capabilities include using a mobile phone (wireless) network, wireless data network (e.g., 3G, 4G, or similar networks), Wi-Fi, Wi-Max, or any other communication medium that may provide access to a network such as the Internet or a private network.

A "card" can include a flat rectangular piece of material. A card can be an integrated circuit chip card that can be used to control access to a resource. In some embodiments, an integrated circuit chip card can include a card substrate with an embedded integrated circuit. In some implementations, the integrated circuit chip card can have a form factor of a wallet-sized card or smaller (e.g., a SIM card). An integrated circuit chip card can provide personal identification, authentication, data storage, and application processing capabilities. The integrated circuit chip card can store any suitable applications (e.g., identification applications, transit applications, interaction applications, security applications, location access applications, etc.).

An "access device" can include any suitable device that provides access to a remote system. An access device may also be used for communicating with a resource provider computer, a network processing computer, an authorization computer, or any other suitable system. An access device may generally be located in any suitable location, such as at the location of a merchant. An access device may be in any suitable form. Some examples of access devices include POS or point of sale devices (e.g., POS terminals), cellular phones, PDAs, personal computers (PCs), tablet PCs, hand-held specialized readers, set-top boxes, electronic cash registers (ECRs), automated teller machines (ATMs), virtual cash registers (VCRs), kiosks, security systems, access systems, and the like. An access device may use any suitable contact or contactless mode of operation to send or receive data from, or associated with, an integrated circuit chip card. In some embodiments, where an access device may comprise a POS terminal, any suitable POS terminal may be used and may include a reader, a processor, and a computer-readable medium. A reader may include any suitable contact or contactless mode of operation. For example, exemplary card readers can include radio frequency (RF) antennas, optical scanners, bar code readers, or magnetic stripe readers to interact with an integrated circuit chip card. In some embodiments, a cellular phone, tablet, or other dedicated wireless device used as a POS terminal may be referred to as a mobile point of sale or an "mPOS" terminal.

"Credentials" may comprise any evidence of authority, rights, or entitlement to privileges. For example, access credentials may comprise permissions to access certain tangible or intangible assets, such as a building or a file. Examples of credentials may include passwords, passcodes, or secret messages. In another example, payment credentials may include any suitable information associated with and/or identifying an account (e.g., a payment account and/or payment device associated with the account). Such information may be directly related to the account or may be derived from information related to the account. Examples of account information may include an "account identifier" such as a PAN (primary account number or "account number"), a token, a subtoken, a gift card number or code, a prepaid card number or code, a user name, an expiration date, a CVV (card verification value), a dCVV (dynamic card verification value), a CVV2 (card verification value 2), a CVC3 card verification value, etc. An example of a PAN is a 16-digit number, such as "4147 0900 0000 1234". In some embodiments, credentials may be considered sensitive information.

The term "public/private key pair" may include a pair of linked cryptographic keys. A public key may be used for functions such as encrypting a message to send to an entity that holds the private key, or for verifying a digital signature which was supposedly made by the entity. The private key may be used for functions such as decrypting a received message or applying a digital signature. Public and private keys may be in any suitable format, including those based on RSA or elliptic curve cryptography (ECC).

A "blockchain network" may be any set of nodes (computer systems and components) configured to provide verification for interactions. A blockchain network may comprise a distributed computing environment utilizing several nodes that are interconnected via communication links, using one or more computer networks or direct connections. A blockchain network may be implemented over any appropriate network, including an intranet, the Internet, a cellular network, a local area network or any other such network or combination thereof. Components used for such a system can depend at least in part upon the type of network and/or environment selected. Protocols and components for communicating via such a network are well known and will not be discussed herein in detail. Communication over the blockchain network can be enabled by wired or wireless connections and combinations thereof. Nodes may be independently operated by third parties and may be added to, or removed from, the blockchain network on a continuous basis. In some embodiments, a node in a blockchain network may be a full node.

A "node" can be a "computer node," which can be any computer or device that connects to the blockchain network. A node that can fully verify each block and interaction in a blockchain can be a full node. A "full node" can store the full blockchain (i.e., each block and each interaction).

A "blockchain" can be a distributed database that maintains a continuously-growing list of records secured from tampering and revision. A blockchain may include a number of blocks of interaction records. Each block in the blockchain can contain also include a timestamp and a link to a previous block. Stated differently, interaction records in a blockchain may be stored as a series of "blocks," or permanent files that include a record of a number of interactions occurring over a given period of time. Blocks may be appended to a blockchain by an appropriate node after it completes the block and the block is validated. Each block can be associated with a block header. In embodiments, a blockchain may be distributed, and a copy of the blockchain may be maintained at each full node in a verification network. Any node within the verification network may subsequently use the blockchain to verify interactions.

A "block header" can be a header including information regarding a block. A block header can be used to identify a particular block an a blockchain. A block header can comprise any suitable information, such as a previous hash, a Merkle root, a timestamp, a nonce, and a Merkle tree root. In some embodiments, a block header can also include a difficulty value.

An "address" can be a string of characters that identifies a destination, location, or entity. An address can be an alphanumeric value that is equivalent to or derived from a public key. For example, a receiver address can be a receiver public key or derived from the receiver public key.

An "interaction" can include a reciprocal action or influence. An interaction can include a communication, contact, or exchange between parties, devices, and/or entities. Example interactions include a transaction between two parties and a data exchange between two devices. Interactions can also be agreements, contracts, and the like.

A "processor" may include a device that processes something. In some embodiments, a processor can include any suitable data computation device or devices. A processor may comprise one or more microprocessors working together to accomplish a desired function. The processor may include a CPU comprising at least one high-speed data processor adequate to execute program components for executing user and/or system-generated requests. The CPU may be a microprocessor such as AMD's Athlon, Duron and/or Opteron; IBM and/or Motorola's PowerPC; IBM's and Sony's Cell processor; Intel's Celeron, Itanium, Pentium, Xeon, and/or XScale; and/or the like processor(s).

A "memory" may be any suitable device or devices that can store electronic data. A suitable memory may comprise a non-transitory computer readable medium that stores instructions that can be executed by a processor to implement a desired method. Examples of memories may comprise one or more memory chips, disk drives, etc. Such memories may operate using any suitable electrical, optical, and/or magnetic mode of operation.

A "server computer" may include a powerful computer or cluster of computers. For example, the server computer can be a large mainframe, a minicomputer cluster, or a group of servers functioning as a unit. In one example, the server computer may be a database server coupled to a Web server. The server computer may comprise one or more computational apparatuses and may use any of a variety of computing structures, arrangements, and compilations for servicing the requests from one or more client computers.

Embodiments of the disclosure allow for the storage of cryptographic keys for processing blockchain interactions on a card. Once the cryptographic keys are stored in the card, the user can perform interactions with the card. Each interaction can use the cryptographic keys stored on the card.

In some embodiments, a mobile application or a browser of an access device or user device (e.g., a sender device or receiver device) such as a mobile phone, tablet, or computer, can interact with the card in an interaction using a contactless interface (e.g., an NFC or Bluetooth^{™} interface) of an access device or user device. The private key on the card may be used to sign data that can be incorporated on a blockchain and the public key can be used to verify digital signatures for interactions.

In some embodiments, a card issuer operating a card issuing computer can load a user public key and a user private key of a user public-private key pair that is associated with a particular blockchain network on a card such as a payment card. In some cases, the cryptographic key pair can be loaded to the card when personalizing the card for the first time. In other cases, the user public key and the user private key can be loaded to the card at a later time (e.g., after the card is personalized, such as via an access device).

If the user is performing an interaction such as sending cryptocurrency to another person, the user may be performing a sending method. In a sending method, the user can be referred to as a "sender," the user public key can be referred to as a "sender public key," the user private key can be referred to as a "sender private key," and the user public-private key pair can be referred to as a "sender public-private key pair."

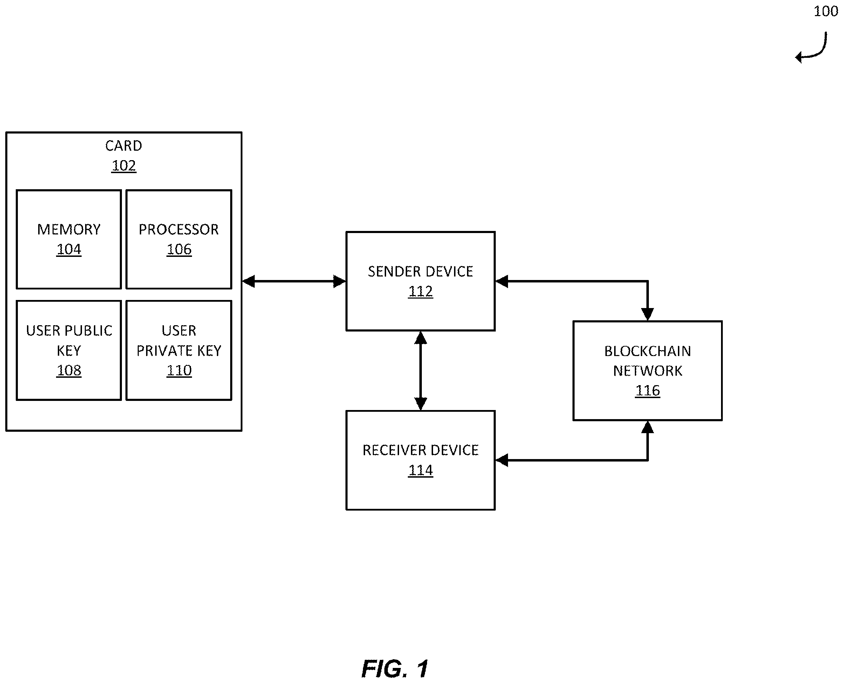

FIG. 1 shows a system 100 according to embodiments of the disclosure. The system 100 comprises a card 102 comprising a memory 104, a processor 106, a user public key 108, and a user private key 110. The user public key 108 and the user private key 110 can be stored in the memory 104. The system 100 further comprises a sender device 112, a receiver device 114, and a blockchain network 116. The card 102 can be in operative communication with the sender device 112. The sender device 112 can be in operative communication with the receiver device 114 and the blockchain network 116. The receiver device 114 can be in operative communication with the sender device 112 and the blockchain network 116.

For simplicity of illustration, a certain number of components are shown in FIG. 1. It is understood, however, that embodiments of the invention may include more or less components.

Messages between the devices such as the sender device 112 and the receiver device 114, and any nodes in the blockchain network 116 included in system 100 in FIG. 1 can be transmitted using a secure communications protocols such as, but not limited to, File Transfer Protocol (FTP); HyperText Transfer Protocol (HTTP); Secure Hypertext Transfer Protocol (HTTPS), SSL, ISO (e.g., ISO 8583) and/or the like. The communications network may include any one and/or the combination of the following: a direct interconnection; the Internet; a Local Area Network (LAN); a Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and/or the like); and/or the like. The communications network can use any suitable communications protocol to generate one or more secure communication channels. A communications channel may, in some instances, comprise a secure communication channel, which may be established in any known manner, such as through the use of mutual authentication and a session key, and establishment of a Secure Socket Layer (SSL) session.

The card 102 can communicate with the sender device 112 via a short range communication protocol (e.g., NFC, Bluetooth^{™}, etc.) or via contact.

The card 102 can include the memory 104, the processor 106, the user public key 108, and the user private key 110. The card 102 can be any suitable card that can allow a user to access or transfer a resource, or otherwise take action with respect to a blockchain. For example, the card 102 can be a driver's license, insurance card, debit card, a credit card, a prepaid card, a rewards card, etc. The card 102 can be an EMV (Europay, MasterCard, Visa) compatible card and can include a microchip comprising the memory 104 and the processor 106. The card 102 can be powered by another device (e.g., an access device, a user device, etc.) and can safely store sensitive data such as cryptographic keys and personal data of the user of the card 102. The card 102 can be initialized and personalized with data provided by the issuer of the card 102. The personalization data can contain the cryptographic keys required for card interaction processing and user related data such as card number, card expiration date, card holder name, card configurations, etc. In some embodiments, the card number, card expiration date, and verification values such as dCVV, dCVV2, CVV, and CVV2 values can be included on the card 102. In such embodiments, the card 102 can function as a card that can conduct transactions using blockchain based digital or cryptocurrencies, and/or a normal credit, debit, or prepaid card.

The card 102 can be a contact only card, a contactless only card, a dual contact/contactless card, etc. Thus, the card 102 can also transmit and receive data over a contact interface or a contactless interface (not shown in FIG. 1) in the card 102. An application loaded into the card 102 can process data and send requests from the card 102 and can receive responses from external devices.

The memory 104 can store one or more applications for data exchange and interactions. Examples of such applications include interaction applications such as transit applications, secure location access applications, payment applications, etc. In one example, the memory 104 can store a transit application and a blockchain application. The transit application can allow a user of the card 102 to access to a transit system (e.g., a train station). The blockchain application can allow a user of the card 102 to interact with another user or a resource provider via a blockchain network. In some embodiments, an interaction application can be provisioned by a card issuing computer.

The user public key 108 and the user private key 110 can be cryptographic keys of a user public-private cryptographic key pair, that is specially associated with a blockchain network. For example, the cryptographic key pair could be used with a Bitcoin blockchain network.

The sender device 112 and the receiver device 114 both be examples of user devices. For example, the sender device 112 can be a user device such as a smartphone, while the receiver device 114 can be a user device such as a laptop computer.

In some embodiments, the sender device 112 can communicate with the card 102 over a short range, secure communication channel to exchange data. For example, in an example interaction, the sender device 112 can provide interaction data to the card 102, and the card 102 can sign the interaction data with the user private key 110. The sender device 112 can then provide the signed interaction data to the blockchain network 116 so that it can be included into the blockchain managed by the blockchain network 116. In an example, the interaction data can indicate a transfer of a value from an account associated with the user public key 108 of the sender operating the sender device 112 to an account associated with a receiver public key associated with a receiver operating the receiver device 114.

The receiver device 114 can obtain the user public key 108 from the sender device 112 or other entity and can verify that the signed interaction data has been included into the blockchain by querying the blockchain network 116 for the block that includes the signed interaction data. In some embodiments, the sender device 112 can provide a block identifier that identifies the block that includes the signed interaction data to the receiver device 114.

In some embodiments, the blockchain network 116 can be a cryptocurrency blockchain network. The blockchain network 116 can utilize public-private cryptographic key pairs for security and interaction processing.

For example, to receive funds in the blockchain network 116 from a sender, a receiver can provide a receiver public key and (in some embodiments) related data to the sender. In some embodiments, the receiver public key can be the receiving address. In other embodiments, the receiver public key and the related data can be utilized to obtain the receiver address. The related data can include, for example, a value such as an amount of funds to transfer from the sender to the receiver. During a cryptocurrency transaction, the private key of the sender can be used to sign the transaction data including the receiver public key, the sender public key, and the transaction amount, and the signed transaction data can be incorporated into the blockchain maintained by the blockchain network 116. The signing of the transaction data with the private key of the sender proves that the sender owns the funds that are sent. The receiver can verify the signed transaction data using the public key of the sender.

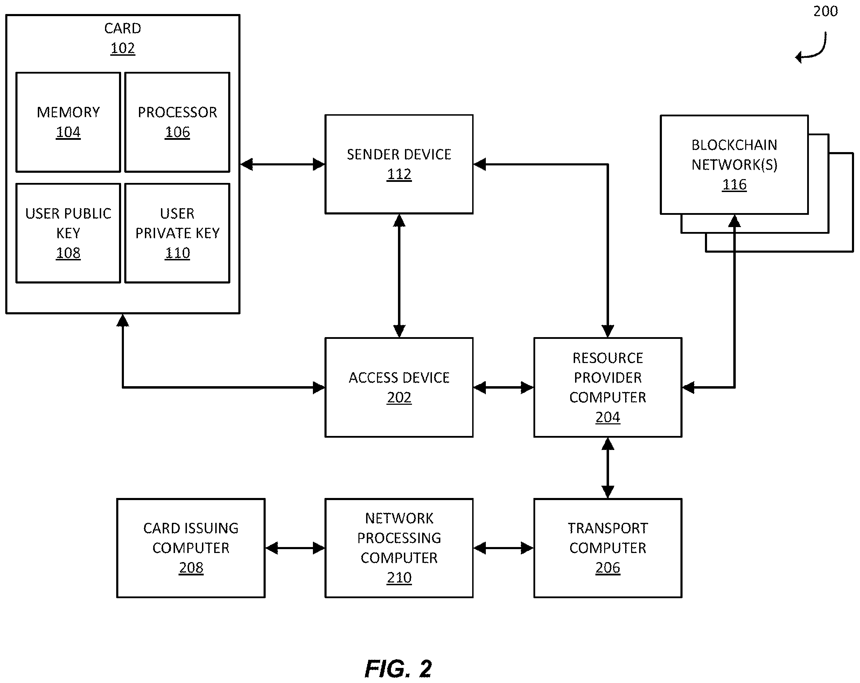

FIG. 2 shows another system 200 according to embodiments of the disclosure. The system 200 comprises the card 102 comprising the memory 104, the processor 106, the user public key 108, and the user private key 110. The system 200 further comprises the sender device 112 and the blockchain network(s) 116, as illustrated in system 100 of FIG. 1. The system 200 also comprises an access device 202, a resource provider computer 204, a transport computer 206, a network processing computer 210, and a card issuing computer 208.

The card 102 can be in operative communication with the sender device 112 and the access device 202. The access device 202 can be in operative communication with the card 102, the sender device 112, and the resource provider computer 204. The sender device 112 can be in operative communication with the card 102, the access device 202, and the resource provider computer 204. The resource provider computer 204 can be in operative communication with the sender device 112, the access device 202, the blockchain network(s) 116, and the transport computer 206. The transport computer 206 can be in operative communication with the resource provider computer 204 and the network processing computer 210, which can be in operative communication with the card issuing computer 208. Messages between the devices included in the system 200 in FIG. 2 can be transmitted in similar manners to the messages between the devices included in the system 100 in FIG. 1, and will not be repeated in detail here.

The access device 202 can include a device for providing access to an external computer system. The access device 202 can, for example, provide access to resource provider computer 204. The access device 202 and the resource provider computer 204 can be operated by a resource provider. The access device 202 can be configured to communicate with cards (e.g., the card 102) and/or user devices (e.g., the sender device 112). For example, the access device 202 can communicate with the card 102 over a short range communication channel (e.g., Bluetooth, NFC, etc.) or a contact based communication channel.

The access device 202 can communicate with the card 102 or the sender device 112 to perform an interaction. The access device 202 can obtain interaction data for an interaction between the sender of the sender device 112 and a resource provider of the resource provider computer 204. The interaction data can include a value for the interaction. For example, the interaction can be a transaction and the value in the interaction data can be a transaction amount.

The interaction data can be provided to the card 102 directly or via the sender device 112. The card 102 can then sign the interaction data using the user private key 110 stored on the card 102.

The access device 202 can obtain the signed interaction data from the card 102 directly or via the sender device 112, which receives the signed interaction data from the card 102. The access device 202 can then provide the signed interaction data to the resource provider computer 204.

The resource provider computer 204 can include any suitable computational apparatus operated by a resource provider. In some embodiments, the resource provider computer 204 may include a web server computer that may host one or more websites associated with the resource provider.

The resource provider computer 204 can obtain the signed interaction data from the access device 202. The resource provider computer 204 can then submit the signed interaction data to a blockchain network 116 of one or more blockchain networks. The blockchain network 116 can then process the signed interaction data as described herein.

In some embodiments, the resource provider computer 204 can receive the signed interaction data from the sender device 112 over a long range communication channel (e.g., the Internet, etc.).

As an illustrative example, the sender device 112 can access a resource provider website that is hosted on the Internet by the resource provider computer 204. The sender device 112 can select one or more resources to access from the resource provider website. The sender device 112 can obtain interaction data from the resource provider website and then provide the interaction data to the card 102. The card 102 can sign the interaction data, if valid, using the user private key 110. The card 102 can then provide the signed interaction data to the sender device 112. The sender device 112 can provide the signed interaction data to the resource provider computer 204. Upon receiving the signed interaction data, the resource provider computer 204 can provide the signed interaction data to the blockchain network 116.

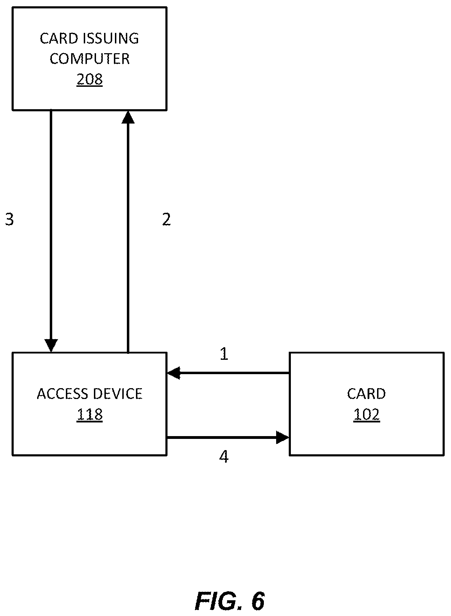

In some embodiments, the system 200 can further include the transport computer 206, the network processing computer 210, and the card issuing computer 208. For example, the transport computer 206, the network processing computer 210, and the card issuing computer 208 can be present if the card issuing computer 208 is to provision one or more public-private cryptographic key pairs to the card 102 during or in place of an interaction. Such a process will be described in reference to FIG. 6.

The transport computer 206 can include a computer operated by an entity (e.g., a commercial bank) that has a relationship with a particular resource provider (e.g., a merchant) or other entity and that may be involved in the process of conducting interactions. The transport computer 206 may issue and manage accounts for resource providers on behalf of the resource provider. Some entities can perform both card issuing computer 208 and transport computer 206 functions. The transport computer 206 can be configured to provide data between the resource provider computer 204 and the network processing computer 210.

The network processing computer 210 can include a network that includes or operates at least one server computer used for interaction processing (e.g., payment processing). The network processing computer 210 include a processor and a computer readable medium coupled to the processor, the computer readable medium comprising code, executable by the processor for performing the functionality described herein.

The network processing computer 210 may include data processing subsystems, networks, and operations used to support and deliver authorization services, exception file services, and clearing and settlement services. An exemplary network processing computer 210 may include VisaNet^{™}. Networks that include VisaNet^{™} are able to process credit card transactions, debit card transactions, and other types of commercial transactions. VisaNet^{™}, in particular, includes an integrated payments system (Integrated Payments system) which processes authorization requests and a Base II system, which performs clearing and settlement services. The network processing computer 210 may use any suitable wired or wireless network, including the Internet.

The card issuing computer 208 can include a computer operated by an issuer. The card issuing computer 208 can be operated by an issuer that issued the card 102 to the sender of the sender device 112. The card issuing computer 208 can maintain an account associated with the card 102. The card issuing computer 208 can provision cryptographic keys to the card 102, as described herein.

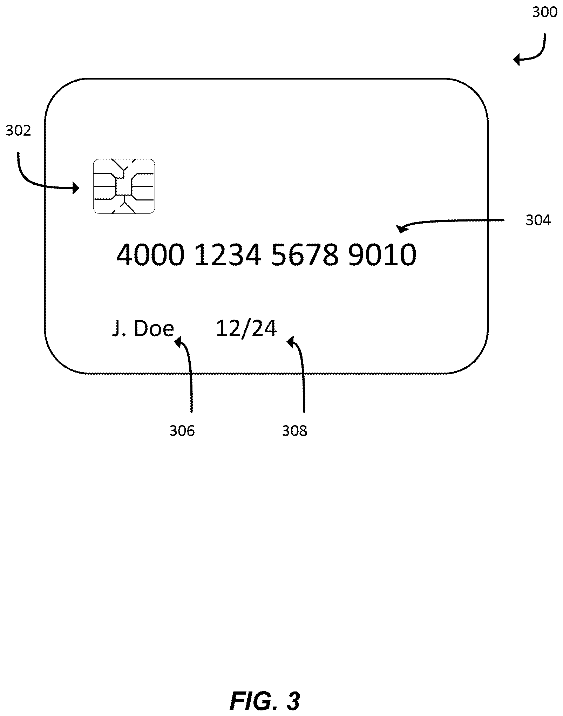

FIG. 3 shows a front view of a card 300 according to embodiments. The card 300 can comprise an interface 302, a card number 304, a user name 306, and an expiration date 308. The card 300, which includes the microchip 302, can be referred to as an integrated circuit card (ICC).

The card 300 may include an input/output (I/O) interface 302. In some embodiments, the I/O interface 302 may include a set of one or more electrical contacts and can be ISO 7816 complaint. In some embodiments, I/O interface 302 may also include or be coupled to an ISO 14443 compliant contactless communication interface having one or more RF transceivers to interact with, for example, a contactless card reader. Communications between an external device such as a card reader of an access device and the card 300 can be carried out using application protocol data unit (APDU) commands sent from the external device to the card 300 via the interface 302 and using APDU responses sent from the card 300 to the external device via the interface 302. The APDU commands from the external device can be interpreted by an APDU interface (not shown) to allow the external device to interact and exchange data with one or more applications stored on the card 300. In some embodiments, the interface 302 can comprise a plurality of physical ports (e.g., contact chip, RF transceiver, etc.).

The card number 304 can include a number that is printed or embossed on the card 300. The card number 304 can identify an account associated with the card 300. For example, the card number 304 can identify an account maintained by a card issuing computer on behalf of a user of the card 300. The card number 304 can be an account number.

The user name 306 can include a name of the user. The user name 306 can be printed or embossed on the card 300. The user name 306 can identify the user of the card 300.

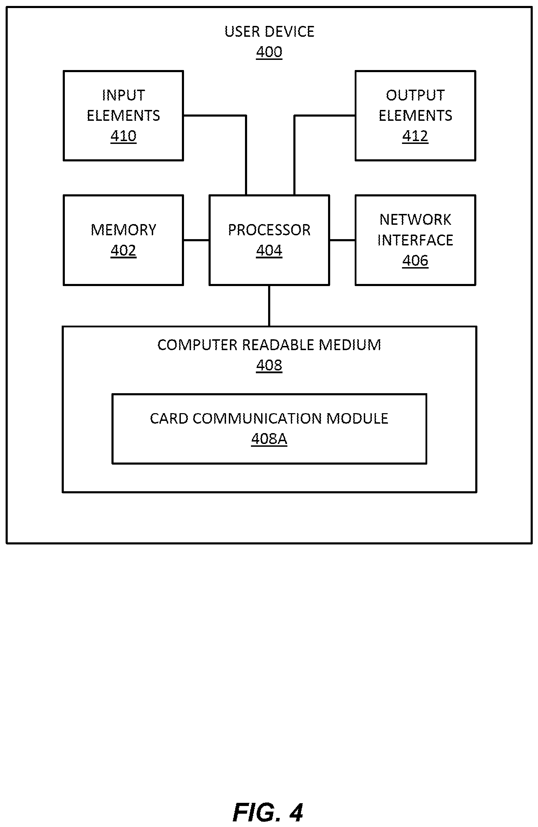

FIG. 4 shows a block diagram of an example user device 400 according to embodiments. The exemplary user device 400 may comprise a processor 404. The processor 404 may be coupled to a memory 402, a network interface 406, input elements 410, output elements 412, and a computer readable medium 408. The computer readable medium 408 can comprise a card communication module 408A.

The memory 402 can be used to store data and code. For example, the memory 402 can store interaction data, communication related data, etc. The memory 402 may be coupled to the processor 404 internally or externally (e.g., cloud based data storage), and may comprise any combination of volatile and/or nonvolatile memory, such as RAM, DRAM, ROM, flash, or any other suitable memory device.

The one or more input elements 410 may include any suitable device(s) capable of inputting data into the user device 400. Examples of input elements 410 include buttons, touchscreens, touch pads, microphones, etc.

The one or more output elements 412 may comprise any suitable device(s) that may output data. Examples of output elements 412 may include display screens, speakers, and data transmission devices. For example, the output elements 412 can include a display screen capable of displaying a response value to a user of the user device 400.

The computer readable medium 408 may comprise code, executable by the processor 404, where the user device 400 is a sender device, for performing a method comprising: receiving, by a sender device operated by a sender, a receiver address associated with a receiver; prompting, by the sender device, the sender to interact a card comprising a processor and a memory storing a sender public key and a sender private key of a sender public-private key pair associated with a blockchain network, the card held by the sender; transmitting, by the sender device, interaction data including the receiver address, a sender address of the sender, and a value to the card, wherein the processor of the card retrieves the sender private key and signs the interaction data to produce signed interaction data; receiving, by the sender device from the card, the signed interaction data and the sender public key; and transmitting the interaction data and the signed interaction data to the blockchain network, wherein the blockchain network records the interaction data and the signed interaction data in a block of a blockchain, wherein the blockchain comprises a plurality of blocks, wherein each block of the plurality of blocks includes a block header, a timestamp, and a link to a previous block.

The card communication module 408A may comprise code or software, executable by the processor 404, for communicating with a card. The card communication module 408A, in conjunction with the processor 404, can generate messages for and receive messages from a card. The card communication module 408A, in conjunction with the processor 404, can generate an application protocol data units (APDU) for communicating with the card. An APDU can be a communication unit between the card and the user device 400. The structure of the APDU can be defined by ISO/IEC 7816-4.

There are two categories of APDUs: command APDUs and response APDUs. A command APDU is sent by the user device 400 to the card. The card communication module 408A, in conjunction with the processor 404, can generate an APDU command that contains a 4-byte header (CLA, INS, P1, P2) and a body that includes from 0 to 65 535 bytes of data. A response APDU is sent by the card to the user device 400. The response APDU can include from 0 to 65 536 bytes of data, and 2 status bytes (SW1, SW2).

As an example, the card communication module 408A, in conjunction with the processor 404, can generate an APDU message that includes interaction data. The card communication module 408A, in conjunction with the processor 404, can provide the interaction data to the card. In response, the card communication module 408A, in conjunction with the processor 404, can receive an APDU message that includes signed interaction data.

In some embodiments, the card communication module 408A, in conjunction with the processor 404, can generate an APDU message that includes both the interaction data as well as a selection of a blockchain network, which was selected by the user of the user device 400. The selection of the blockchain network can be included in the APDU message, by the card communication module 408A, in conjunction with the processor 404, as an application identifier (AID). The AID can indicate a particular application on the card to utilize for the interaction. For example, the AID can indicate for the card to use a blockchain related application stored on the card. Furthermore, the AID, or other data item included in the APDU message, can indicate for the card to use a particular public-private key pair.

The network interface 406 may include an interface that can allow the user device 400 to communicate with external computers. The network interface 406 may enable the user device 400 to communicate data to and from another device (e.g., a card, a resource provider computer, etc.). Some examples of the network interface 406 may include a modem, a physical network interface (such as an Ethernet card or other Network Interface Card (NIC)), a virtual network interface, a communications port, a Personal Computer Memory Card International Association (PCMCIA) slot and card, or the like. The wireless protocols enabled by the network interface 406 may include Wi-Fi^{™}. Data transferred via the network interface 406 may be in the form of signals which may be electrical, electromagnetic, optical, or any other signal capable of being received by the external communications interface (collectively referred to as "electronic signals" or "electronic messages"). These electronic messages that may comprise data or instructions may be provided between the network interface 406 and other devices via a communications path or channel. As noted above, any suitable communication path or channel may be used such as, for instance, a wire or cable, fiber optics, a telephone line, a cellular link, a radio frequency (RF) link, a WAN or LAN network, the Internet, or any other suitable medium.

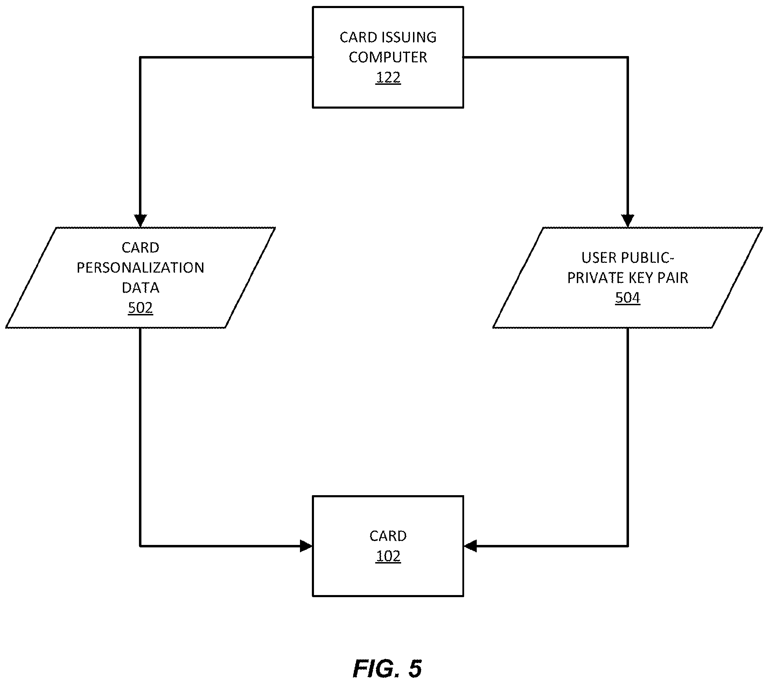

FIG. 5 shows a flowchart illustrating a first cryptographic key provisioning method according to embodiments. The method illustrated in FIG. 5 will be described in the context of a card issuing computer 122 provisioning at least cryptographic keys to a card 102 during a card personalization phase. The card personalization phase may occur after the card 102 has been manufactured and after a user requests or is set to receive the card 102, but the card 102 has not yet been provided to the user.

During card personalization the card issuing computer 122 can generate card personalization data 502. The card personalization data 502 can include data that is related to the user of the card 102. For example, the card personalization data 502 can include a primary account number (PAN), a user name, an expiration date, and a card verification value (CVV). The card issuing computer 122 can then provide the card personalization data 502 to the card 102.

The card issuing computer 122 can also provision a user public-private key pair 504. The user public-private key pair 504 can include a user public key and a user private key. In some embodiments, the user public-private key pair 504 can be a pre-defined key pair that is obtained from a secure memory or database. In other embodiments, the user public-private key pair 504 can be generated by the card issuing computer 122 using an asymmetric cryptographic key generation process. The user public-private key pair 504 can be loaded (e.g., written into memory) into the card 102.

In some embodiments, multiple public-private key pairs can be stored in a single card. For example, the card issuing computer 122 can obtain three different public-private key pairs from a secure database. The card issuing computer 122 can provide the three public-private key pairs to the card 102. The three key pairs may respectively correspond to three different blockchain networks.

In some embodiments, the card 102 can obtain the public-private key pair from the card issuing computer 122. In other embodiments, the card 102 can receive a set key pair command from the card issuing computer 122. The set key pair command can indicate for the card 102 to generate a public-private key pair. The set key pair command can be initiated during card personalization by the card issuing computer 112 or after the card is issued via an issuer script that is processing on an access device, which sends the set key pair command to the card 102.

Upon receiving the set key pair command, the card 102 can generate the public-private key pair locally, rather than receive the public-private key pair from the card issuing computer 122. The card 102 can generate the public-private key pair in a similar manner to how the card issuing computer 122 generates the public-private key pair.

In yet other embodiments, the card 102 can receive multiple set key pair commands from the card issuing computer 122 during the personalization phase and/or from one or more access devices after the personalization phase.

After the personalization phase, the card 102 can be provided to the user of the card 102.

FIG. 6 shows a flowchart illustrating a second cryptographic key provisioning method according to embodiments. The method illustrated in FIG. 6 will be described in the context of a card issuing computer 122 provisioning a cryptographic key pair to a card 102 after the card has been issued to a user. The card 102 can perform an interaction with an access device 118, during which, the card issuing computer 122 can provision the cryptographic key pair to the card 102. The access device 118 can be, for example, an automatic teller machine (ATM), a POS terminal, etc.

If the card issuing computer 122 opts not to load the public-private key pair during card personalization (e.g., as illustrated in FIG. 5), the public-private key pair can be loaded after the card 102 is issued to the user. In this case, the card 102 can initiate an interaction (e.g., a transaction).

After the interaction has been initiated between the card 102 and the access device 118, at step 1, the card 102 can provide user credentials to the access device 118. The user credentials can include, for example, a primary account number, an expiration date, and a CVV or a PIN.

At step 2, after obtaining the user credentials, the access device 118 can generate an authorization request message comprising the user credentials as well as interaction data. In some embodiments, the authorization request message may be an ISO 8583 message. The interaction data can indicate a value for the interaction if access to a resource is desired. However, if the purpose of the interaction is to obtain cryptographic keys for the card 102, then the value of the interaction may be zero, no amount, or a nominal amount. As an example, if the interaction is a transaction to obtain a resource such as a good or service, then the value can be a monetary amount that the user of the card 102 has agreed to. As another example, if the interaction is a data transfer, then the value can be an amount of data that the user of the card 102 is requesting. The access device 118 can provide the authorization request message to the card issuing computer 122.

In some embodiments, the access device 118 can provide the authorization request message to the card issuing computer 112 directly. For example, the access device 118 can be an ATM that can communicate with the card issuing computer 112. The user can request to obtain resources from the ATM, which can request the card issuing computer 112 to authorize the request for resources.

In other embodiments, the access device 118 can provide the authorization request message to a resource provider computer (e.g., the resource provider computer 204 of FIG. 2). The resource provider computer can then provide the authorization request message to a transport computer (e.g., the transport computer 206 of FIG. 2). After receiving the authorization request message, the transport computer can provide the authorization request message to a network processing computer (e.g., the network processing computer 210 of FIG. 2). The network processing computer can then provide the authorization request message to the card issuing computer 208. Such a routing process may occur during an interaction between the user of the card 102 and a resource provider of the access device 118.

At step 3, after the card issuing computer 122 receives the authorization request message, the card issuing computer 122 can determine whether or not to authorize the interaction. The card issuing computer 122 can generate an authorization response message comprising an indication of whether or not the interaction is authorized. The card issuing computer 122 can further insert a script (e.g., code) that securely contains a public-private key pair(s) into the authorization response message. The card issuing computer 122 can provide the authorization response message to the access device 118.

In some embodiments, the card issuing computer 112 can provide the authorization response message to the access device 118 via a network processing computer, a transport computer, and a resource provider computer.

At step 4, after the access device 118 receives the authorization response message, the access device 118 can provide the authorization response message, or data contained therein (e.g., at least the script) to the card 102. The access device 118 can also evaluate the authorization response message and can perform further processing based on whether or not the interaction is authorized. For example, further processing can include providing an amount of money, data, or a resouce (e.g., a good or service) to the user of the card 102.

After the card 102 receives the script, the card 102 can run the script. For example, a processor of the card 102 can implement the instructions contained within the script. The instructions contained within the script can include securely obtaining the public-private key pair included within the script. The card 102 can securely store the public-private key pair in memory. In some embodiments, the key pair may be securely transferred from the card issuing computer 208 to the card 102 by encrypting the key pair or at least the private key using encryption keys (e.g., symmetric keys) that are shared between the card issuing computer 208 and the card 102. In some cases, the shared keys are keys that are derived from data including at least a master key and an account number.

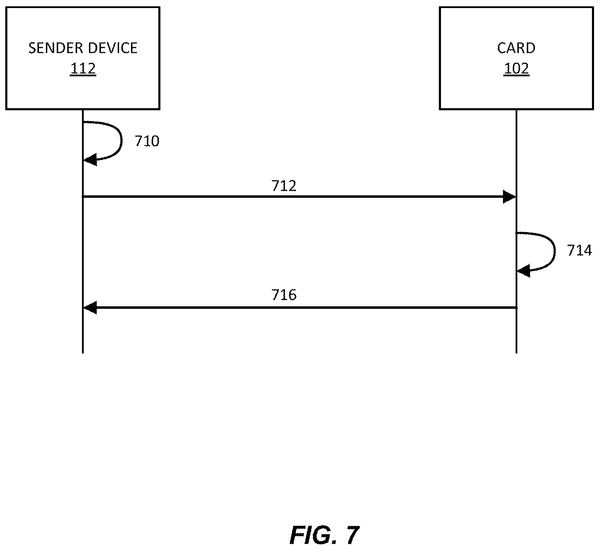

FIG. 7 shows a flow diagram illustrating a digital wallet on card creation method according to embodiments. A digital wallet is an example of a "digital container." A "digital container" can include digital wallets, digital files, etc. The method illustrated in FIG. 7 will be described in the context of a sender device 112 communicating with a card 102 to generate a digital wallet within the card 102. It is understood, however, that the invention can be applied to other circumstances (e.g., where the sender device 112 is a receiver device, etc.).

After the public-private key pair has been loaded into the card 102 and is ready to use, the user may initiate creation of a digital wallet. The digital wallet is stored inside the card 102 and can be a data structure that stores a name, a type, and a key index number. In some embodiments, the card can include a plurality of digital wallets, where each digital wallet can include one or more public-private key pairs.

At step 710, the user can utilize a mobile application, or a web site provided by the card issuer or a service provider, via the sender device 112, to generate a digital wallet creation request message. In some embodiments, the sender device 112 can communicate with the card 102 through a near field communication (NFC) interface. In other embodiments, the sender device 112 can communicate with the card 102 via a contact card reader attached to the sender device 112.

In some embodiments, the mobile application, or the web site, which can be maintained by the card issuer computer, can attempt to authenticate the user. The mobile application or the web site can prompt the user of the sender device 112 to input authentication data into the mobile application or the web site. The authentication data can include a password, a PIN, a one-time password, a biometric, etc.

If the user is authenticated, then the mobile application or the web site, in conjunction with the sender device 112, can generate the digital wallet creation request message. The digital wallet creation request message can comprise a name, a type, and a key index. The name can be a name of the digital wallet that is to be created. For example, the name may be something like "Joe's cryptocurrency wallet". The type can be a type of digital wallet that is to be created. For example, the type can be a debit digital wallet, a cryptocurrency wallet, a building access digital wallet, etc. The key index can be a value that is to be assigned to a public-private key pair of the card 102. For example, the key index would be "1" for a keys for a Bitcoin wallet, and "2" for keys for an Ethereum wallet, wherein those keys would be stored in a cryptocurrency wallet.

At step 712, after generating the digital wallet creation request message, the sender device 112 can provide the digital wallet creation request message to the card 102. The digital wallet creation request message can be provided to the card 102 from the sender device 112 over a short range communication channel (e.g., Bluetooth, NFC, etc.) or via electrical contacts.

At step 714, after receiving the digital wallet creation request message, the card 102 can generate a digital wallet. The digital wallet can be generated locally on the card 102 and software for doing so may reside on the card 102. The card 102 can generate the digital wallet based on data included in the digital wallet creation request message, which may be referred to as digital wallet parameters. The created digital wallet can be protected by a PIN, which is set during the creation of the digital wallet.

At step 716, after generating the digital wallet and a digital wallet creation response message, the card 102 can provide the digital wallet creation response message to the sender device 112. It can indicate to the sender device 112 that the card 102 has successfully created the digital wallet.

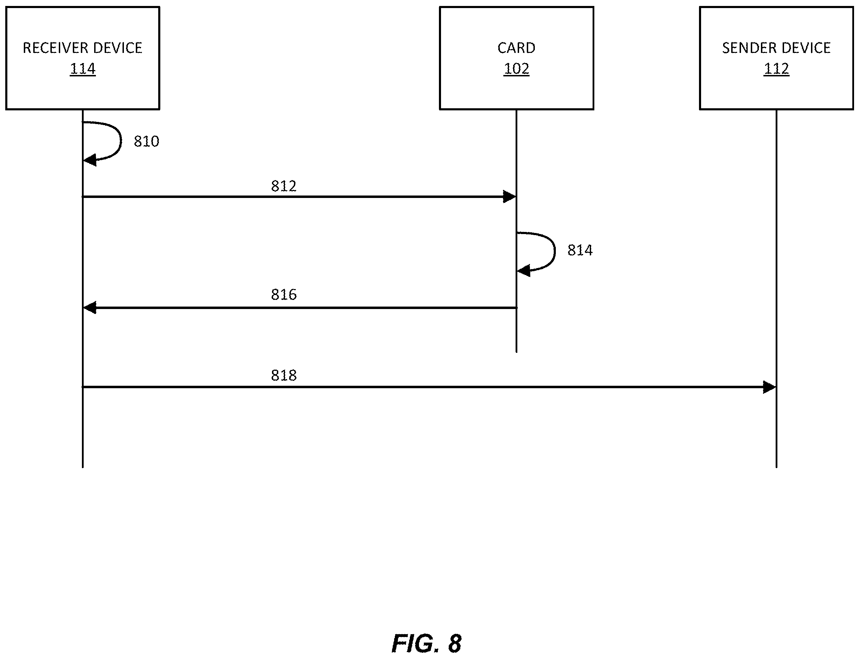

FIG. 8 shows a flow diagram illustrating a receiving method according to embodiments. The method illustrated in FIG. 8 will be described in the context of a receiver device 114 providing a receiver address to a sender device 112. The receiver address can be an address to which the sender device 112 can provide values, data, etc.

Prior to step 810, the receiver device 114 and the card 102, in conjunction, can create a digital wallet on the card 102, as described in reference to FIG. 7.

At step 810, the receiver device 114 can generate a receiver address request message (e.g., a receiver public key address message) that requests the receiver address (e.g., receiver public key) from the card 102, using an application on the receiver device 114. The receiver operating the receiver device 114 may interact with the application and may choose to perform an interaction using a digital wallet such as "cryptocurrency wallet" and may wish to use "Bitcoin" as a currency. The application may then generate the receiver address request message, which can include the digital wallet name (or associated identifier) and a key index for the chosen currency. The key index can be a numeric identifier that identifies the receiver public key stored on the card 102. In some embodiments, the receiver address is the receiver public key. In other embodiments, the receiver address is derived in part from the receiver public key.

The receiver address request message can further comprise an address format, in some embodiments. The receiver device 114 can request that the receiver address be provided, from the card 102, in a particular format according to the use case of the receiver address. For example, a particular blockchain network may utilize elliptic curve digital signature algorithm (ECDSA) public keys.

In some embodiments, the receiver address request message can be a generate address command. The generate address command can be a command that requests the card 102 to return an address (e.g., a public key of a public-private key pair). The generate address command can indicate a particular address format used by a particular blockchain network. For example, the generate address command can indicate a format that is 16, 32, 34, 64, etc. characters in length.

At step 812, after generating the receiver address request message, the receiver device 114 can provide the receiver address request message to the card 102.

At step 814, after receiving the receiver address request message, the card 102 can obtain the receiver address. For example, the card 102, in conjunction with a processor of the card 102, can retrieve or generate the receiver public key from a memory in the card 102. In some embodiments, if the receiver address is not the receiver public key, but rather is derived from at least the receiver public key, then the card 102 can derive the receiver address.

At step 816, after obtaining the receiver address, the card 102 can provide the receiver address to the receiver device 114.

At step 818, after receiving the receiver address from the card 102, the receiver device 114 can provide the receiver address to a sender device 112. In some embodiments, the receiver device 114 can provide a value to the sender device 112. The value can be an amount associated with an interaction between the receiver device 114 and the sender device 112. For example, the value can be a monetary amount, an amount of data to transfer, etc.

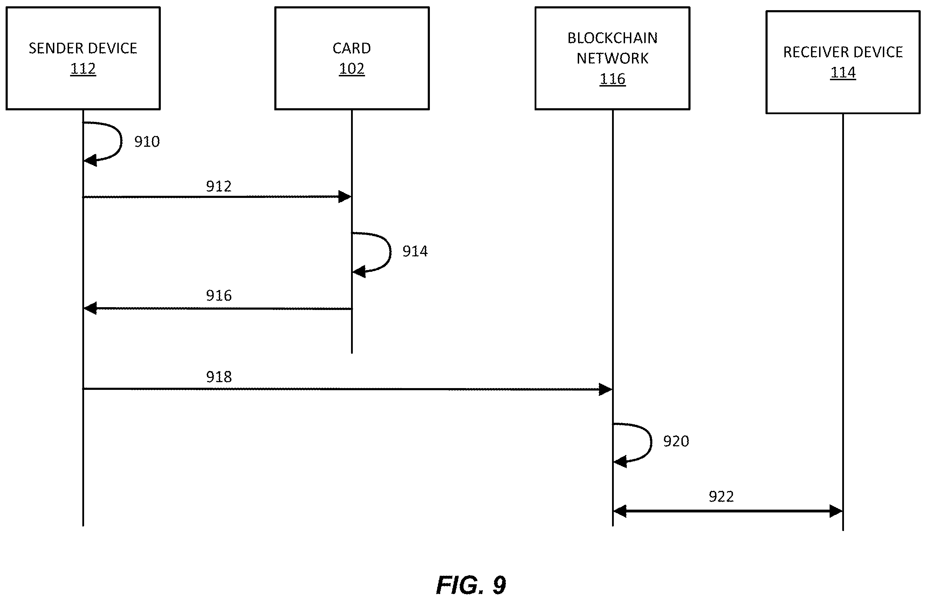

After the sender device 112 receives the receiver address, the sender device 112 can proceed with the interaction, for example, as described in reference to FIG. 9.

FIG. 9 shows a flow diagram illustrating a sending method according to embodiments. The method illustrated in FIG. 9 will be described in the context of a sender device 112 providing a value to a receiver device 114 via a blockchain network 116. It is understood, however, that the invention can be applied to other circumstances. For instance, instead of transferring money, the data transferred may be data that is used to record some other interaction such as a voting interaction.

At step 910, the sender device 112 can receive a receiver address associated with a receiver of the receiver device 114. For example, the sender device 112 can receive the receiver address from the receiver device 114 as described in reference to FIG. 8. However, it is understood that the sender device 112 can receive the receiver address in any suitable manner and is not limited to receiving the receiver address from a receiver device that is in communication with a card. For example, the sender device 112 can receive the receiver address from an access device (e.g., the access device 202 of FIG. 2).

The sender device 112 can also receive a value for the interaction. For example, the value can be received from a receiver device 114, as described at step 818 of FIG. 8. In some embodiments, the sender device 112 can receive, or otherwise obtain, the value from a receiver device, a website, a scannable code, an access device, etc. The scannable code can be, for example, a QR code or a bar code.

The sender device 112 can prompt the sender to interact a card 102 with the sender device 112. The sender device 112 may have an application allows the sender to select a particular wallet and/or type of address (e.g., a type of cryptocurrency address such as a Bitcoin address) before or during the interaction. The card 102 can comprise a processor and a memory storing a sender public key and a sender private key of a sender public-private key pair associated with a blockchain network. The card can be held by the sender of the sender device 112. For example, the sender device 112 can prompt the sender (e.g., user of the sender device) to bring the card 102 into proximity of the sender device 112, such the card 102 is within a short range communication limit. The short range communication limit can depend on the type of short range communication channel utilized to establish communication between the sender device 112 and the card 102. The short range communication channel can be a Bluetooth communication channel, an NFC communication channel, etc.

At step 912, the sender device 112 can transmit interaction data including the receiver address, a sender address of the sender, and the value to the card 102. In some embodiments, the sender device 112 may not include the sender address into the interaction data, since the card 102 can store the sender address. For example, once the card 102 receives the interaction data, the card 102 can modify the interaction data to include the sender address, in some embodiments.

In some embodiments, the memory of the card 102 can store a plurality of public-private key pairs associated with a plurality of blockchain networks, and the sender public-private key pair is one of the plurality of public-private key pairs. If the card 102 stores more than one public-private key pair, then the application on the sender device 112 can prompt the sender to select a blockchain network from the plurality of blockchain networks. The sender device 112 can receive a selection of the blockchain network associated with the sender public-private key pair from the sender. The sender device 112 can then transmit the selection of the blockchain network to the card 102. In some embodiments, transmitting the selection of the blockchain network comprises transmitting an application identifier (AID) for the blockchain network to the card 102. The AID can indicate a particular application on the card 102 for the card 102 to execute during step 914. The selection of the blockchain network can be provided along with the interaction data.

In some embodiments, after receiving the interaction data the card 102 can generate an authentication request message. The authentication request message can include a request for the sender of the sender device 112 to authenticate themselves. The card 102 can transmit the authentication request message to the sender device 112.

After receiving the authentication request message, the sender device 112 can prompt the sender to input authentication data. The authentication data can include a personal identification number, a biometric, a zip code, or a one-time password. The sender device 112 can receive the authentication data from the sender. The sender device 112 can then generate an authentication response message comprising the authentication data and transmit the authentication response message to the card 102. Upon receive the authentication response message, the card 102 can verify the authentication data. For example, the card 102 can compare the received authentication data to stored authentication data. If the data matches, then the card 102 can determine that the sender is authentic and can proceed with the process.

At step 914, after receiving the interaction data from the sender device 112, the card 102 can sign the interaction data (e.g., the sender address, the receiver address, the amount to be transferred from the sender to the receiver, a date or timestamp, etc.) to produce signed interaction data. For example, the processor of the card 102 can retrieve the sender private key associated with the selected wallet and/or transaction type from a memory and sign the interaction data to produce signed interaction data.

In some embodiments, the card 102 can receive the interaction data along with a sign crypto transaction command. Upon receiving sign crypto transaction command, the card 102 can provide the sign crypto transaction command and the interaction data to an application stored in the card 102. For example, the application stored in the card 102 can be an EMV applet. The EMV applet can verify the received data (e.g., the interaction data) and generate output data for the interaction (e.g., a crypto transaction). The output data can include the signed interaction data as well as any other data that can be utilized by a blockchain network to store interaction data (e.g., dates, times, etc.). The output data can be used to perform a crypto transaction in a blockchain network.

At step 916, after signing the interaction data, the card 102 can provide the signed interaction data to the sender device 112. The card 102 can also provide the sender public key to the sender device 112, in some embodiments.

At step 918, after receiving the signed interaction data, the sender device 112 can transmit the interaction data and the signed interaction data to one or more nodes of the blockchain network 116.

At step 920, after receiving the interaction data and the signed interaction data, the blockchain network 116 can record the interaction data and the signed interaction data in a block of a blockchain. The blockchain can comprise a plurality of blocks, where each block of the plurality of blocks includes a block header, a timestamp, and a link to a previous block.

To record the interaction data and the signed interaction data in a block, one or more nodes of the blockchain network 116 validate the interaction data and the signed interaction data. For example, the nodes in the blockchain network 116 can validate the signed interaction data using the sender public key included in the interaction data. The validation can take place using proof-of-work, proof-of-stake, or consensus mechanisms.

In a proof-of-work blockchain system, after validating the interaction data and the signed interaction data, the one or more nodes of the blockchain network 116 can generate a valid proof of work for the block and validate that the valid proof of work is valid in conjunction with a plurality of nodes in the blockchain network 116. Once the proof of work is agreed to be valid by a plurality of nodes in the blockchain network 116, the nodes can generate the block and add the block to the blockchain.

At step 922, after the blockchain network 116 has processed the interaction, in some embodiments, one or more nodes can notify the receiver device 114 that the interaction has been added to the blockchain. In other embodiments, after the blockchain network 116 has processed the interaction, the receiver device 114 can query the blockchain network 116 for the interaction that is stored in the block, so that the receiver device 114 can verify that the interaction has occurred.

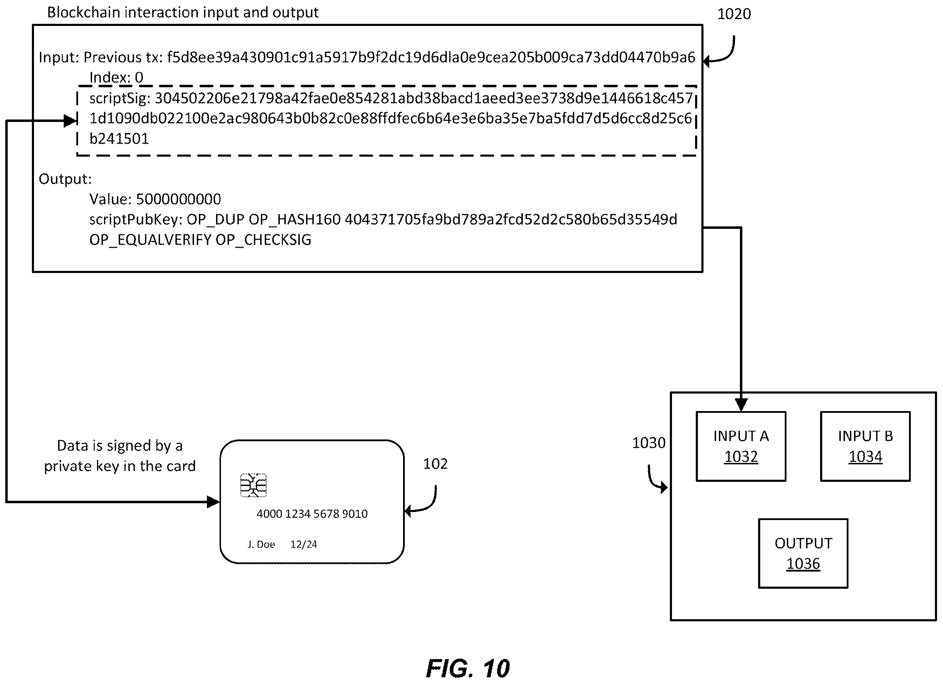

FIG. 10 shows a block diagram illustrating a card and a blockchain with inputs and outputs according to embodiments. FIG. 10 includes a card 102, a previous interaction 1020, and a next interaction 1030 comprising two inputs (input A 1032 and input B 1034) and an output 1036.

Each blockchain interaction that is stored on the blockchain has one or more inputs and one or more outputs. Each block on the blockchain can store a plurality of blockchain interactions. The inputs to the next interaction 1030 include data from previous interaction(s) (e.g., the previous interaction 1020). For example, input A 1032 to the blockchain interaction 1030 includes the output from the previous interaction 1020.

The previous interaction 1020 includes an input and an output. The input can include a previous interaction output that can identify a particular previous interaction. The input is a reference to an output from a previous interaction. Multiple inputs can be listed in an interaction. All of the interaction's input values (e.g., the total value of the previous outputs referenced by the interaction's inputs) are added up, and the total is completely used by the outputs of the interaction. The input includes a hash of the previous transaction (e.g., f5d8ee39a430901c91a5917b9f2dc19d6dIa0e9cea205b009ca73dd04470b9a6). The input also includes an index. The index can indicate a specific output in the referenced previous interaction since the previous interaction can include more than one output.

The input also includes a signature (e.g., scriptSig). The signature can be generated by the card 102. The signature can be generated by the card 102 by signing interaction data with a private key stored on the card 102, as described herein.

In some embodiments, the scriptSig element can include two components: the signature and the public key corresponding to the private key used to create the signature. The public key can be used to verify the signature. For example, the second component can be an ECDSA signature over a hash of interaction data. The signature, combined with the public key, proves that the interaction was created by the real owner of the inputs in question.

The previous interaction 1020 also includes an output. The output contains instructions for sending values for the interaction. The output can include a value that this output will be worth when claimed. In some embodiments, there can be more than one output, and they share the combined value of the inputs. Because each output from one interaction can only ever be referenced once by an input of a subsequent interaction, the entire combined input value needs to be sent in an output.

The previous interaction 1020 output also includes a script referred to as "scriptPubKey." The output script can be evaluated using the inputs. If the output script returns true, then the input is authorized. The scriptPubKey can be used to verify that the inputs to the interaction result in the outputs of the interaction. The scriptPubKey can indicate any suitable condition to claim the outputs (e.g., hold a specific public key corresponding to a held private key, be claimed by anyone without any authorization, be redeemable with a password instead of a key, and/or any other condition that can be created using the blockchain networks scripting system).

Embodiments of the disclosure have several advantages. For example, a user can securely store one or more cryptographic key pairs on a card for use in one or more blockchain networks as well as in an interaction processing system where the interaction is authorized by a card issuing computer. This provides the user with flexibility in how to process interaction, while maintaining a secure manner of storing sensitive cryptographic keys.

Embodiments provide for several additional advantages. For example, by storing the one or more public-private cryptographic key pairs on the card directly from the card issuing computer, the private key is never exposed. Further, if the card is ever damaged or malfunctions, the user would not lose all of the data (e.g., cryptocurrency) recorded on the blockchain as in conventional systems. Rather, the card issuer can provide a replacement set of cryptographic keys to the card or another card and can provide it to the user. The user can then continue to conduct interactions with the blockchain network. Still further, because the cryptographic keys are not stored on the device that directly communicates with the blockchain network, the cryptographic keys are less likely to be stolen by hackers, since the cryptographic keys are always decoupled from the blockchain network and other external computers and stored in ICCs that never expose the keys to outside interactions, except when transactions are conducted. This is not the case when cryptographic keys are stored on general purpose phones or computers.

Although the steps in the flowcharts and process flows described above are illustrated or described in a specific order, it is understood that embodiments of the invention may include methods that have the steps in different orders. In addition, steps may be omitted or added and may still be within embodiments of the invention.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission, suitable media include random access memory (RAM), a read a read only memory (ROM), a magnetic medium such as a hard-drive or a floppy disk, or an optical medium such as a compact disk (CD) or DVD (digital versatile disk), flash memory, and the like. The computer readable medium may be any combination of such storage or transmission devices.

Such programs may also be encoded and transmitted using carrier signals adapted for transmission via wired, optical, and/or wireless networks conforming to a variety of protocols, including the Internet. As such, a computer readable medium according to an embodiment of the present invention may be created using a data signal encoded with such programs. Computer readable media encoded with the program code may be packaged with a compatible device or provided separately from other devices (e.g., via Internet download). Any such computer readable medium may reside on or within a single computer product (e.g. a hard drive, a CD, or an entire computer system), and may be present on or within different computer products within a system or network. A computer system may include a monitor, printer, or other suitable display for providing any of the results mentioned herein to a user.

The above description is illustrative and is not restrictive. Many variations of the invention will become apparent to those skilled in the art upon review of the disclosure. The scope of the invention should, therefore, be determined not with reference to the above description, but instead should be determined with reference to the pending claims.

As used herein, the use of "a," "an," or "the" is intended to mean "at least one," unless specifically indicated to the contrary.

## Claims

1. A method comprising:
receiving, by a sender device (112) operated by a sender, a receiver address associated with a receiver;
prompting, by the sender device (112), the sender to interact a card (102) comprising a processor (106) and a memory (104) storing a sender public key and a sender private key of a sender public-private key pair associated with a blockchain network (116), the card (102) held by the sender;
transmitting, by the sender device (112), interaction data including the receiver address, a sender address of the sender, and a value to the card (102), wherein the processor (106) of the card (102) retrieves the sender private key and signs the interaction data to produce signed interaction data;
receiving, by the sender device (112) from the card (102), the signed interaction data and the sender public key; and
transmitting the interaction data and the signed interaction data to the blockchain network (116), wherein the blockchain network (116) records the interaction data and the signed interaction data in a block of a blockchain, wherein the blockchain comprises a plurality of blocks, wherein each block of the plurality of blocks includes a block header, a timestamp, and a link to a previous block,
wherein the memory (104) stores a plurality of public-private key pairs associated with a plurality of blockchain networks (116), and the public-private key pair is one of the plurality of public-private key pairs, and wherein the method further comprises:
prompting, by the sender device (112), the sender to select the blockchain network from the plurality of blockchain networks (116);
receiving, by the sender device (112), a selection of the blockchain network associated with the sender public-private key pair; and
transmitting, by the sender device (112), the selection of the blockchain network to the card (102).

2. The method of claim 1, wherein the receiver address is a receiver public key and the sender address is the sender public key.

3. The method of claim 1, wherein transmitting the interaction data and the signed interaction data to the blockchain network further comprises:
transmitting, by the sender device (112), the interaction data and the signed interaction data to an access device (202) or a resource provider computer (204), wherein the access device (202) or the resource provider computer (204) transmits the interaction data and the signed interaction data to the blockchain network.

4. The method of any preceding claim, wherein transmitting the selection of the blockchain network comprises transmitting an AID for the blockchain network to the card (102).

5. The method of claim 1, wherein prior to receiving the receiver address, the card is provisioned with the sender public key and the sender private key of the sender public-private key pair from a card issuing computer (208).

6. The method of claim 1, wherein one or more nodes of the blockchain network validate the interaction data and the signed interaction data, generate a valid proof of work for the block, validate that the valid proof of work is valid, generate the block, and add the block to the blockchain.

7. The method of claim 1 further comprising:
prior to receiving the receiver address, generating, by the sender device (112), a digital container creation request message that requests the card to generate a digital container comprising a name, a type, and a key index that is assigned to a private key stored on the card, wherein the private key stored on the card is the sender private key of the sender public-private key pair; and
sending, by the sender device (112), the digital container creation request message to the card, wherein the card generates the digital container and assigns the sender private key of the sender public-private key pair to the key index.

8. The method of claim 1, wherein after receiving the interaction data the card generates an authentication request message and transmits the authentication request message to the sender device (112), wherein the method further comprises:
after receiving the authentication request message, prompting, by the sender device (112), the sender to input authentication data;
receiving, by the sender device (112), the authentication data from the sender;
generating, by the sender device (112), an authentication response message comprising the authentication data; and
transmitting, by the sender device (112), the authentication response message to the card (102), wherein the card (102) verifies the authentication data.

9. The method of claim 8, wherein the authentication data includes a personal identification number, a biometric, a zip code, or a one-time password.

10. A sender device comprising:
a processor;
a memory device; and
a computer-readable medium coupled to the processor, the computer-readable medium comprising code executable by the processor for implementing a method according to any of claims 1 to 4 and 7.

## Patentansprüche

1. Verfahren, umfassend:
Empfangen, durch eine von dem Absender betriebene Absendervorrichtung (112), einer Empfängeradresse, die einem Empfänger zugeordnet ist;
Auffordern, durch die Absendervorrichtung (112), des Absenders, mit einer Karte (102) zu interagieren, die einen Prozessor (106) und einen Speicher (104) umfasst, der einen öffentlichen Schlüssel des Absenders und einen privaten Schlüssel des Absenders eines öffentlichen-privaten Schlüsselpaars des Absenders speichert, das einem Blockchain-Netzwerk (116) zugeordnet ist, wobei die Karte (102) von dem Absender gehalten wird;
Übertragen, durch die Absendervorrichtung (112), von Interaktionsdaten, einschließlich der Empfängeradresse, einer Absenderadresse des Absenders und eines Wertes an die Karte (102), wobei der Prozessor (106) der Karte (102) den privaten Schlüssel des Absenders abruft und die Interaktionsdaten signiert, um signierte Interaktionsdaten zu erzeugen;
Empfangen, durch die Absendervorrichtung (112) von der Karte (102), der signierten Interaktionsdaten und des öffentlichen Schlüssels des Absenders; und
Übertragen der Interaktionsdaten und der signierten Interaktionsdaten an das Blockchain-Netzwerk (116), wobei das Blockchain-Netzwerk (116) die Interaktionsdaten und die signierten Interaktionsdaten in einem Block einer Blockchain aufzeichnet, wobei die Blockchain eine Mehrzahl von Blöcken umfasst, wobei jeder Block der Mehrzahl von Blöcken einen Block-Header, einen Zeitstempel und einen Link zu einem vorherigen Block enthält,
wobei der Speicher (104) eine Mehrzahl von öffentlichen-privaten Schlüsselpaaren speichert, die einer Mehrzahl von Blockchain-Netzwerken (116) zugeordnet sind, und das öffentlicheprivate Schlüsselpaar eines der Mehrzahl von öffentlichen-privaten Schlüsselpaaren ist, und wobei das Verfahren ferner umfasst:
Auffordern, durch die Absendervorrichtung (112), des Absenders, das Blockchain-Netzwerk aus der Mehrzahl von Blockchain-Netzwerken (116) auszuwählen;
Empfangen, durch die Absendervorrichtung (112) einer Auswahl des Blockchain-Netzwerks, dem das öffentliche/private Schlüsselpaar des Absenders zugeordnet ist; und
Übertragen, durch die Absendervorrichtung (112), der Auswahl des Blockchain-Netzwerks an die Karte (102).

2. Verfahren nach Anspruch 1, wobei die Empfängeradresse ein öffentlicher Schlüssel des Empfängers und die Absenderadresse der öffentliche Schlüssel des Absenders ist.

3. Verfahren nach Anspruch 1, wobei das Übertragen der Interaktionsdaten und der signierten Interaktionsdaten an das Blockchain-Netzwerk ferner umfasst:
Übertragen, durch die Absendervorrichtung (112), der Interaktionsdaten und der signierten Interaktionsdaten an eine Zugriffsvorrichtung (202) oder einen Ressourcenanbietercomputer (204), wobei die Zugriffsvorrichtung (202) oder der Ressourcenanbietercomputer (204) die Interaktionsdaten und die signierten Interaktionsdaten an das Blockchain-Netzwerk überträgt.

4. Verfahren nach einem der vorstehenden Ansprüche, wobei das Übertragen der Auswahl des Blockchain-Netzwerks das Übertragen einer AID für das Blockchain-Netzwerk an die Karte (102) umfasst.

5. Verfahren nach Anspruch 1, wobei die Karte vor dem Empfangen der Empfängeradresse mit dem öffentlichen Schlüssel des Absenders und dem privaten Schlüssel des Absenders des öffentlichen-privaten Schlüsselpaars des Absenders von einem Kartenausgabecomputer (208) versehen wird.

6. Verfahren nach Anspruch 1, wobei ein oder mehrere Knoten des Blockchain-Netzwerks die Interaktionsdaten und die signierten Interaktionsdaten validieren, einen gültigen Arbeitsnachweis für den Block generieren, die Gültigkeit des gültigen Arbeitsnachweises validieren, den Block generieren und den Block zu der Blockchain hinzufügen.

7. Verfahren nach Anspruch 1, ferner umfassend:
vor dem Empfangen der Empfängeradresse, Erzeugen einer digitalen Container-Erstellungsanforderungsnachricht durch die Absendervorrichtung (112), die die Karte auffordert, einen digitalen Container zu erzeugen, der einen Namen, einen Typ und einen Schlüsselindex umfasst, der einem auf der Karte gespeicherten privaten Schlüssel zugewiesen ist, wobei der auf der Karte gespeicherte private Schlüssel der private Schlüssel des Absenders des öffentlichen-privaten Schlüsselpaars des Absenders ist; und
Senden der Anforderung zur Erstellung eines digitalen Containers durch die Absendervorrichtung (112) an die Karte, wobei die Karte den digitalen Container erstellt und den privaten Schlüssel des Absenders aus dem öffentlichen-privaten Schlüsselpaar des Absenders dem Schlüsselindex zuweist.

8. Verfahren nach Anspruch 1, wobei die Karte nach dem Empfangen der Interaktionsdaten eine Authentifizierungsanforderungsnachricht erzeugt und die Authentifizierungsanforderungsnachricht an die Absendervorrichtung (112) überträgt, wobei das Verfahren ferner umfasst:
nach dem Empfangen der Authentifizierungsanforderungsnachricht, Auffordern, durch die Absendervorrichtung (112), des Absenders zu einem Eingeben von Authentifizierungsdaten;
Empfangen, durch die Absendervorrichtung (112), der Authentifizierungsdaten von dem Absender;
Erzeugen, durch die Absendervorrichtung (112), einer Authentifizierungsantwortnachricht, die die Authentifizierungsdaten umfasst; und
Senden, durch die Absendervorrichtung (112), der Authentifizierungsantwortnachricht an die Karte (102), wobei die Karte (102) die Authentifizierungsdaten verifiziert.

9. Verfahren nach Anspruch 8, wobei die Authentifizierungsdaten eine persönliche Identifikationsnummer, biometrische Daten, eine Postleitzahl oder ein Einmalpasswort umfassen.

10. Absendervorrichtung, umfassend:
einen Prozessor;
ein Speichergerät; und
ein mit dem Prozessor gekoppeltes computerlesbares Medium, das einen von dem Prozessor ausführbaren Code umfasst, um ein Verfahren nach einem der Ansprüche 1 bis 4 und 7 zu implementieren.

## Revendications

1. Procédé comprenant :
la réception, par un dispositif expéditeur (112) mis en fonctionnement par un expéditeur, d'une adresse de destinataire associée à un destinataire ;
le fait d'inviter, par le dispositif expéditeur (112), l'expéditeur à interagir avec une carte (102) comprenant un processeur (106) et une mémoire (104) stockant une clé publique d'expéditeur et une clé privée d'expéditeur d'une paire de clés publique-privée d'expéditeur associée à un réseau à chaîne de blocs (116), la carte (102) étant détenue par l'expéditeur ;
la transmission, par le dispositif expéditeur (112), de données d'interaction comportant l'adresse de destinataire, une adresse d'expéditeur de l'expéditeur et une valeur à la carte (102), dans lequel le processeur (106) de la carte (102) récupère la clé privée d'expéditeur et signe les données d'interaction pour produire des données d'interaction signées ;
la réception, par le dispositif expéditeur (112) depuis la carte (102), des données d'interaction signées et de la clé publique d'expéditeur ; et
la transmission des données d'interaction et des données d'interaction signées au réseau à chaîne de blocs (116), dans lequel le réseau à chaîne de blocs (116) enregistre les données d'interaction et les données d'interaction signées dans un bloc d'une chaîne de blocs, dans lequel la chaîne de blocs comprend une pluralité de blocs, dans lequel chaque bloc de la pluralité de blocs comporte un en-tête de bloc, une estampille temporelle et un lien vers un bloc précédent,
dans lequel la mémoire (104) stocke une pluralité de paires de clés publiques-privées associées à une pluralité de réseaux à chaîne de blocs (116), et la paire de clés publiques-privées est l'une de la pluralité de paires de clés publiques-privées, et dans lequel le procédé comprend en outre :
le fait d'inviter, par le dispositif expéditeur (112), l'expéditeur à sélectionner le réseau à chaîne de blocs parmi la pluralité de réseaux à chaîne de blocs (116) ;
la réception, par le dispositif expéditeur (112), d'une sélection du réseau à chaîne de blocs associé à la paire de clés publique-privée d'expéditeur ; et
la transmission, par le dispositif expéditeur (112), de la sélection du réseau à chaîne de blocs à la carte (102).

2. Procédé selon la revendication 1, dans lequel l'adresse de destinataire est une clé publique de destinataire et l'adresse d'expéditeur est la clé publique d'expéditeur.

3. Procédé selon la revendication 1, dans lequel la transmission des données d'interaction et des données d'interaction signées au réseau à chaîne de blocs comprend en outre :
la transmission, par le dispositif expéditeur (112), des données d'interaction et des données d'interaction signées à un dispositif d'accès (202) ou un ordinateur fournisseur de ressources (204), dans lequel le dispositif d'accès (202) ou l'ordinateur fournisseur de ressources (204) transmet les données d'interaction et les données d'interaction signées au réseau à chaîne de blocs.

4. Procédé selon l'une quelconque des revendications précédentes, dans lequel la transmission de la sélection du réseau à chaîne de blocs comprend la transmission d'un identifiant d'application, AID, du réseau à chaîne de blocs à la carte (102).

5. Procédé selon la revendication 1, dans lequel, avant de recevoir l'adresse de destinataire, la carte est dotée de la clé publique d'expéditeur et de la clé privée d'expéditeur de la paire de clés publique-privée d'expéditeur provenant d'un ordinateur d'émission de carte (208).

6. Procédé selon la revendication 1, dans lequel un ou plusieurs nœuds du réseau à chaîne de blocs valident les données d'interaction et les données d'interaction signées, génèrent une preuve de travail valide pour le bloc, valident que la preuve de travail valide est valide, génèrent le bloc, et ajoutent le bloc à la chaîne de blocs.

7. Procédé selon la revendication 1, comprenant en outre :
avant la réception de l'adresse de destinataire, la génération, par le dispositif expéditeur (112), d'un message de demande de création de conteneur numérique qui demande à la carte de générer un conteneur numérique comprenant un nom, un type et un index de clé qui est attribué à une clé privée stockée sur la carte, dans lequel la clé privée stockée sur la carte est la clé privée d'expéditeur de la paire de clés publique-privée d'expéditeur ; et
l'envoi, par le dispositif expéditeur (112), du message de demande de création de conteneur numérique à la carte, dans lequel la carte génère le conteneur numérique et attribue la clé privée d'expéditeur de la paire de clés publique-privée d'expéditeur à l'index de clé.

8. Procédé selon la revendication 1, dans lequel, après réception des données d'interaction, la carte génère un message de demande d'authentification et transmet le message de demande d'authentification au dispositif expéditeur (112), dans lequel le procédé comprend en outre :
après la réception du message de demande d'authentification, le fait d'inviter, par le dispositif expéditeur (112), l'expéditeur à fournir en entrée des données d'authentification ;
la réception, par le dispositif expéditeur (112), des données d'authentification provenant de l'expéditeur ;
la génération, par le dispositif expéditeur (112), d'un message de réponse d'authentification comprenant les données d'authentification ; et
la transmission, par le dispositif expéditeur (112), du message de réponse d'authentification à la carte (102), dans lequel la carte (102) vérifie les données d'authentification.

9. Procédé selon la revendication 8, dans lequel les données d'authentification comportent un numéro d'identification personnel, un élément biométrique, un code postal ou un mot de passe à usage unique.

10. Dispositif expéditeur comprenant :
un processeur ;
un dispositif de mémoire ; et
un support lisible par ordinateur couplé au processeur, le support lisible par ordinateur comprenant un code exécutable par le processeur pour la mise en œuvre d'un procédé selon l'une quelconque des revendications 1 à 4 et 7.
